## Europäisches Patentamt
## European Patent Office
## Office européen des brevets

(19)

(11) Veröffentlichungsnummer: **0 247 351**
**B1**

(12)

# EUROPÄISCHE PATENTSCHRIFT

(45) Veröffentlichungstag der Patentschrifft:
17.01.90

(21) Anmeldenummer: 87105689.1

(22) Anmeldetag: 16.04.87

(51) Int. Cl. ⁴: **C 04 B 35/66, C 04 B 35/48,**
**F 27 D   1/16**

(54) Feuerfeste thixotrope Vibrations-Masse zur Vibrationszustellung von metallurgischen Gefässen.

(30) Priorität: 07.05.86 DE 3615505

(43) Veröffentlichungstag der Anmeldung:
02.12.87 Patentblatt 87/49

(45) Bekanntmachung des Hinweises auf die Patenterteilung:
17.01.90 Patentblatt 90/03

(84) Benannte Vertragsstaaten:
AT BE DE FR GB IT LU SE

(56) Entgegenhaltungen:
AU-B-484 640
DE-A-2 233 894
GB-A-2 024 796

(73) Patentinhaber: Martin & Pagenstecher GmbH
Schanzenstrasse 31
D-5000 Köln 80 (DE)

(72) Erfinder: König, Gert, Dr.rer.nat.
Im Schönen Winkel 2
D-4133 Neukirchen/Vluyn (DE)
Erfinder: Baumann, Jürgen
Erftstrasse 94
D-4040 Neuss 1 (DE)

(74) Vertreter: Patentanwaltsbüro  Cohausz & Florack
Postfach 14 01 20 Schumannstrasse 97
D-4000 Düsseldorf 1 (DE)

EP 0 247 351 B1

## Beschreibung

Die Erfindung betrifft eine feuerfeste thixotrope selbsthärtende Vibrations-Masse auf der Basis von Zirkoniumsilikat zur Vibrationszustellung von metallurgischen Gefäßen, insbesondere von Stahlwerkspfannen.

Die nicht vorveröffentlichte deutsche Patentanmeldung P-3 445 559.0 betrifft eine thixotrope Masse mit folgender chemischer Zusammensetzung (in Massen-%):

| 24 | bis | 29 | % $SiO_2$ |
|---|---|---|---|
| 10 | bis | 20 | % $Al_2O_3$ |
| 0,2 | bis | 0,8 | % $P_2O_5$ |
| 0 | bis | 1,5 | % $K_2O + Na_2O + LiO_2$ |
| 0 | bis | 0,5 | % $Fe_2O_3$ |
| 0 | bis | 0,05 | % $CaO$ |
| Rest | | | $ZrO_2$ |

und folgender kristallographischer Analyse (in Massen-%) zur Erzielung einer Vibrationsdichte von mindestens 3,6 g/cm³:

| 20 | bis | 30 | % Schmelz-Zirkoniumsilikat-Korund |
|---|---|---|---|
| 1 | bis | 5 | % Tonerde |
| 0,1 | bis | 0,5 | % Amorphe Kieselsäure |
| 0,3 | bis | 1 | % Aluminiummetaphosphat |
| 0,5 | bis | 4 | % Alkalisilikate mit einem Molverhältnis von 1 : 2 bis 1 : 4 |
| Rest | | | Zirkoniumsilikat |

und folgender Kornfraktion:

| 26 bis 32 % | : | bis 0,06 mm |
|---|---|---|
| 32 bis 52 % | : | 0,06 bis 0,5 mm |
| 23 bis 38 % als Rest | : | 0,5 bis 3 mm |

Der Schmelz-Zirkoniumsilikat-Korund kann dabei folgende chemische Zusammensetzung (in Massen-%) haben:

| 13 bis 18 % | $SiO_2$ |
|---|---|
| 32 bis 37 % | $ZrO_2$ |
| Rest | $Al_2O_3$ |

und eine Kornrohdichte von mindestens 3,60 g/cm³ sowie eine Gesamtporosität von 8 % und weniger besitzen.

Der Schmelz-Zirkoniumsilikat-Korund ist ein Schmelzprodukt aus Zirkoniumsilikat und Korund. Aufgrund seiner Herstellung ist es ein relativ teures Produkt, das zudem nicht in beliebigen Mengen verfügbar ist.

Der Erfindung liegt die Aufgabe zugrunde, eine thixotrope Masse vorzuschlagen, die genau so gut ist wie die vorerwähnte, jedoch preiswerter.

Es hat sich nun überraschenderweise herausgestellt, daß diese Aufgabe gelöst wird, wenn das Schmelz-Zirkoniumsilikat-Korund durch Sinter-Bauxit ersetzt wird.

Erfindungsgemäß wird demnach eine feuerfeste thixotrope selbsthärtende Vibrations-Masse auf der Basis von Zirkoniumsilikat vorgeschlagen, die gekennzeichnet ist durch folgende chemische Zusammensetzung (in Massen-%):

| 20 | bis | 30 | % $SiO_2$ |
|---|---|---|---|
| 20 | bis | 45 | % $Al_2O_3$ |
| 0,2 | bis | 0,8 | % $P_2O_5$ |
| 0,7 | bis | 1,4 | % $TiO_2$ |
| 0 | bis | 1,5 | % $K_2O + Na_2O + LiO_2$ |
| 0 | bis | 1,0 | % $Fe_2O_3$ |
| 0 | bis | 0,05 | % $CaO$ |
| Rest | | | $ZrO_2$. |

Sie besteht zur Erzielung einer Vibrationsrohdichte im feuchten Zustand von mindestens 3,5 g/cm³ aus folgenden feuerfesten Grundstoffen (in Massen %):

| 25 | bis | 50 | % Sinter-Bauxit |
|---|---|---|---|
| 1 | bis | 10 | % Tonerde |
| 0,1 | bis | 3,0 | % Amorphe Kieselsäure |
| 0,3 | bis | 1 | % Aluminiummetaphosphat |
| 0,5 | bis | 4 | % Alkalisilikate mit einem Molverhältnis von 1 : 2 bis 1 : 4 |
| Rest | | | Zirkoniumsilikat |

Die Kornfraktion ist wie folgt:

| 20 bis 35 % | : | bis 0,06 mm |
|---|---|---|
| 25 bis 60 % | : | 0,06 bis 0,5 mm |
| 5 bis 55 % als Rest | : | 0,5 bis 5 mm |

Das verwendete Zirkoniumsilikat weist folgendes Kornspektrum auf:

| 20 bis 40 % : | bis 0,06 mm |
|---|---|
| 60 bis 80 % : | 0,06 bis 0,5 mm |

Vorteilhafterweise hat der eingesetzte Sinterbauxit folgende chemische Zusammensetzung (in Massen-%):

| 5 bis 13 % | $SiO_2$ |
|---|---|
| 80 bis 90 % | $Al_2O_3$ |
| Rest | Verunreinigungen |

und besitzt eine Kornrohdichte von mindestens 3,0 g/cm³ sowie eine Gesamtporosität von 20 % und weniger.

Als Tonerde wird reaktive α-Tonerde mit einer mittleren Primärkorngröße unter 3,5 μm und einer Korngröße von mindestens 45 % unter 2 μm und als Kieselsäure kolloidale Kieselsäure mit einer Korngröße unter 1 μm verwendet.

Nach einem weiteren Merkmal der Erfindung beträgt die Anmachwassermenge der Vibrations-Masse je 100 kg Trockenmasse 3,0 bis 5,0 kg.

Die Vibrations-Masse kann 0,05 bis 2 Massen-% pulverförmige Netzmittel, vorzugsweise Alkyl-Aryl-Polyoxiäthanol enthalten.

Zur Vibrationszustellung von metallurgischen Gefäßen, insbesondere Stahlwerkspfannen mit der erfindungsgemäßen feuerfesten thixotropen Masse werden die Bestandteile der Masse im trockenen Zustand intensiv gemischt. Vor Beginn der Vibration wird die Anmachwassermenge zugegeben, die feuchte Masse gemischt, diese unter ständiger Vibration in den Raum zwischen einer eingebrachten Schablone und der Pfannenwand eingefüllt und die Zustellung nach dem Ausschalen aufgeheizt.

Weiter wird die Anmachwassermenge mit einer Genauigkeit von mindestens 0,1 % zugegeben und die feuchte Masse wenigstens 2, höchstens 10 min. gemischt. Nach dem Ausschalen wird die Zustellung auf 150°C mit einer maximalen Geschwindigkeit von 8°C/h aufgeheizt.

In der DE-OS-2 927 993 ist eine feuerfeste vibrierbare Masse zur Zustellung metallurgischer Gefäße beschrieben worden, die aus Zirkoniumsilikat, kalziniertem Bauxit, kalziniertem Kaolin und Phosphorsäure bestehen kann.

Diese bekannte Vibrations-Masse ist nicht geeignet, den Einsatz von Sinter-Bauxit in der erfindungsgemäßen Vibrations-Masse nahezulegen, weil - offenbar bewirkt durch den porösen kalzinierten Bauxit - die Masse nur Schüttdichten zwischen 2,35 und 2,50 g/cm$^3$ aufweist. Die Schlackenbeständigkeit muß daher als nicht ausreichend betrachtet werden. Der hohe Wassergehalt zwischen 6,4 und 7,1 % bringt die Gefahr mit sich, daß die fertigvibrierte Zustellung nach dem Ziehen der Schablone in sich zusammenfällt.

Aus der DE-OS-3 027 192 ist eine rüttelfähige plastische Mischung zur Verwendung für feuerfeste bzw. feuerbeständige Auskleidungen bekannt, auf der Basis eines üblichen feuerfesten bzw. feuerbeständigen Grundmaterials, wobei als Grundmaterialien u.a. Bauxit und Zirkoniumsilikat genannt werden. Die Mischung enthält zwingend 4 bis 25 Gewichtsanteile eines Thixotropiermittels in Form eines Tonproduktes, ferner 0,1 bis 0,5 Gewichtsanteile eines alkalischen Elektrolyten mit pH 10 bis 11 und 4 bis 8 Gewichtsanteile Wasser.

Auch diese bekannte rüttelfähige Masse ist nicht geeignet, die erfindungsgemäße Masse nahezulegen. Nach der DE-OS-3 027 192 scheint es notwendig zu sein, Zirkonsilikat-Bauxit mit einem Thixotropiermittel in Form von Ton vibrierbar zu machen. Dieser Ton führt zu hohen Wassergehalten, Trocknungsproblemen und außerdem zu Schwindungsrissen, die einen vorzeitigen Verschleiß bewirken. Außerdem ist die Transportfähigkeit wegen Vorverdichtung beschränkt, ebenso die Lagerfähigkeit.

Demgegenüber bestehen die Vorteile der erfindungsgemäßen Vibrations-Masse mit Sinterbauxit darin, daß die Masse lange (> 6 Monate) lagerfähig ist, beim Transport keine Verdichtung aufweist, aufgrund der geringen Wassergehalte leicht zu trocknen ist und beim Gebrauch keine Schwindrisse aufweist.

Die Erfindung wird nachstehend anhand von Ausführungsbeispielen erläutert.

**Beispiel 1**

Eine erfindungsgemäße thixotrope selbsthärtende Vibrations-Masse zur Zustellung einer Stahlgießpfanne mit einem Fassungsvermögen von 85 t wies folgende feuerfeste Komponenten auf:

40 Massen-% Zirkoniumsilikat mit einer Korngröße 0,05 bis 0,5 mm
22 Massen-% Zirkoniumsilikat mit einer Korngröße 0 bis 0,06 mm
30 Massen-% Sinter-Bauxit mit einer Korngröße 1 bis 3 mm
4,5 Massen % α-Tonerde mit einer mittleren Primär-Korngröße < 3,5 μm
2 Massen-% amorphe Kieselsäure mit einer Korngröße < 1 μm.

Der eingesetzte Sinter-Bauxit hatte folgende chemische Zusammensetzung (in Massen-%):

6 % $SiO_2$
88 % $Al_2O_3$
Rest Verunreinigungen

die Kornrohdichte beträgt 3,15 g/cm$^3$ und die Gesamtporosität 18 %.

Die feuerfesten Komponenten wurden in einem Mischer unter Zusatz von

0,1 % Aluminiummetaphosphat-Pulver
1 % Kaliumsilikat mit einem Mol-Verhältnis von 1 : 2,5

im trockenen Zustand intensiv gemischt und luftdicht verpackt.

Die chemische Analyse der Masse lautet (in Massen-%) wie folgt:

0,35 % $Fe_2O_3$
26 % $SiO_2$
29 % $Al_2O_3$
0,5 % $P_2O_5$
0,5 % $K_2O$
1,0 % $TiO_2$
Rest $ZrO_2$

Die Kornfraktionen verteilen sich wie folgt:

26 % : bis 0,06 mm
44 % : 0,06 bis 0,5 mm
30 % : 0,5 bis 5 mm.

Die Masse ist tonfrei und frei von hydraulischem Bindemittel und weist daher kein Kristallwasser auf. Der freie $SiO_2$-Gehalt liegt bei 2 %. In einer mit dieser Masse zugestellten Pfanne können Entschwefelungsbehandlungen mit kalkhaltigen Substanzen mit verbesserten Ergebnissen vorgenommen und hochmanganhaltige Stähle vergossen werden. Im Stahlwerk wird die trockene Masse in Chargen von je 2 t in einen Zwangsmischer gegeben und unter Zusatz von 3,4 kg Anmachwasser je 100 kg Trockenmasse intensiv gemischt.

Die exakte Wasserdosierung erfolgt mit einer elektrischen Impulssteuerung mit einer Genauigkeit von 0,1 %. Die Mischzeit nach der Wasserzugabe beträgt 4 min. Anschließend wird die Masse aus der Mischvorrichtung ausgetragen und zur zuzustellenden Stahlgießpfanne transportiert. Das Einfüllen der Mischung in den Raum zwischen einer eingebrachten Schablone und der Pfannenwand und das Vibrieren geschieht innerhalb einer Zeit von 4 min.

Nach dem Vibrieren wird die Schablone gezogen. Die Zustellung wird anschließend mit einer Geschwindigkeit von 6°C/h auf 150°C aufgeheizt und anschließend auf Betriebstemperatur gebracht.

Die fertige Zustellung weist folgende Eigenschaften auf:

Vibrationsdichte (Rohdichte) feucht: 3,55 g/cm$^3$
Gesamt-Porosität : 19 Vol.-%
Gasdurchlässigkeit : 0,4 nPm
Thermische Dehnung bis 1.000°C : 0,5 %
Kaltdruckfestigkeit nach Vorbrand
1.000 °C : 67 N/mm$^2$

Bei der Behandlung von Edelstahlschmelzen in der ausgekleideten Pfanne betrug die Haltbarkeit der Zustellung 119 Chargen; dies ist eine 1,4-fache Haltbarkeit gegenüber einer Zustellung mit Steinen (ca. 80 Chargen).


**Beispiel 2**

Eine weitere erfindungsgemäße thixotrope selbsthärtende Masse wies folgende Komponenten (in Massen %) in der angegebenen Körnung auf:

| | | |
|---|---|---|
| 30 | % Sinterbauxit | 1 bis 3 mm |
| 7 | % Sinterbauxit | 0,06 bis 0,5 mm |
| 3 | % Sinterbauxit | < 0,06 |
| 32 | % Zirkonsilikat | 0,05 bis 0,5 mm |
| 20 | % Zirkonsilikat | 0 bis 0,06 mm |
| 4,5 | % α-Tonerde | < 3,5 μm |
| 2 | % amorphe Kieselsäure | |

Die chemischen Eigenschaften Kornrohdichte und Gesamtporosität des Sinterbauxits entsprachen dem Beispiel 1.

Die Feuerfest-Komponenten wurden unter Zusatz von

0,5 % Aluminiummetaphosphat
1 % Kaliumsilikat mit einem Molverhältnis von 1 : 2,5
0,9 % Netzmittel (auf 100 %)

in einem Mischer im trockenen Zustand intensiv gemischt, und wie im Beispiel 1, jedoch mit 3,9 % Wasser angemacht, behandelt.

Die chemische Analyse der Masse lautet (in Massen-%):

1,05 % Fe$_2$O$_3$
26,5 % SiO$_2$
36,8 % Al$_2$O$_3$
0,55 % P$_2$O$_5$

0,53 % K$_2$O
1,02 % TiO$_2$
Rest ZrO$_2$

Die Kornfraktionen verteilen sich wie folgt:

28 % : bis 0,06 mm
42 % : 0,06 bis 0,5 mm
30 % : 0,5 bis 5 mm

Die Masse wurde wie im Beispiel 1 zur Zustellung einer Stahlgießpfanne eingesetzt.

Die fertige Zustellung wies folgende Eigenschaften auf:

Vibrationsdichte (Rohdichte, feucht): 3,51 g/cm$^3$
Gesamtporosität : 21 Vol.-%
Thermische Dehnung bis 1 000 °C : 0,52 %
Kaltdruckfestigkeit nach Vorbrand
1 000°C : 49 N/mm$^2$

Die Haltbarkeit der Auskleidung lag bei 109 Chargen.


**Patentansprüche**

1. Feuerfeste thixotrope selbsthärtende Vibrations-Masse auf der Basis von Zirkoniumsilikat zur Erzielung einer Vibrationsdichte von mindestens 3,5 g/cm$^3$, *gekennzeichnet durch* folgende chemische Zusammensetzung: (in Massen-%)

| | | |
|---|---|---|
| 20 bis 30 | % SiO$_2$ | |
| 20 bis 45 | % Al$_2$O$_3$ | |
| 0,7 bis 1,4 | % TiO$_2$ | |
| 0,2 bis 0,8 | % P$_2$O$_5$ | |
| 0 bis 1,5 | % K$_2$O + Na$_2$O + LiO$_2$ | |
| 0 bis 1,0 | % Fe$_2$O$_3$ | |
| 0 bis 0,05 | % CaO | |
| Rest | ZrO$_2$ | |

und mit folgenden feuerfesten Grundstoffen (in Massen-%)

25 bis 50 % Sinterbauxit
1 bis 10 % Tonerde
0,1 bis 3,0 % Amorphe Kieselsäure
0,3 bis 1 % Aluminiummetaphosphat
0,5 bis 4 % Alkalisilikate mit einem Molverhältnis von 1 : 2 bis 1 : 4
Rest Zirkoniumsilikat

und folgender Kornfraktion:

20 bis 35 % : bis 0,06 mm
25 bis 60 % : 0,06 bis 0,5 mm
5 bis 55 % : 0,5 bis 5 mm

2. Masse nach Anspruch 1 *dadurch gekennzeichnet*, daß das Zirkoniumsilikat folgendes Kornspektrum aufweist:

7

20 bis 40 :     bis 0,06 mm
60 bis 80 : 0,06 bis 0,5  mm

3. Masse nach Anspruch 1 oder 2, *dadurch gekennzeichnet*, daß der Sinter-Bauxit folgende chemische Zusammensetzung (in Massen-%) hat:

  5 bis 13 % $SiO_2$
80 bis 90 % $Al_2O_3$
Rest        Verunreinigung

und eine Kornrohdichte von mindestens 3,0 g/cm$^3$ sowie eine Gesamtporosität von 20 % und weniger besitzt.

4. Masse nach einem der Ansprüche 1 bis 3, *dadurch gekennzeichnet*, daß als Tonerde reaktive α-Tonerde mit einer mittleren Primärkorngröße unter 3,5 μm und einer Korngröße von mindestens 45 % unter 2 μm und als Kieselsäure kolloidale Kieselsäure mit einer Korngröße unter 1 μm verwendet wird.

5. Masse nach einem der Ansprüche 1 bis 4, *dadurch gekennzeichnet*, daß die Anmachwassermenge je 100 kg Trockenmasse 3,0 bis 5,0 kg beträgt.

6. Masse nach einem der Ansprüche 1 bis 5, *dadurch gekennzeichnet*, daß sie 0,05 bis 0,2 Massen-% pulverförmige Netzmittel, vorzugsweise Alkyl-Aryl-Polyoxiäthanol enthält.

7. Verfahren zur Vibrationszustellung von metallurgischen Gefäßen, insbesondere von Stahlwerkspfannen, mit einer feuerfesten, thixotropen Masse nach einem der Ansprüche 1 bis 6, *dadurch gekennzeichnet*, daß die Bestandteile der Masse im trockenen Zustand intensiv gemischt werden, daß vor Beginn der Vibration die Anmachwassermenge zugegeben, die feuchte Masse gemischt, diese unter ständiger Vibration in den Raum zwischen einer eingebrachten Schablone und der Pfannenwand eingefüllt und die Zustellung nach dem Ausschalen aufgeheizt wird.

8. Verfahren nach Anspruch 7, *dadurch gekennzeichnet*, daß die Anmachwassermenge mit einer Genauigkeit von mindestens 0,1 % zugegeben und die feuchte Masse wenigstens 2 und höchstens 10 min. gemischt wird.

9. Verfahren nach Anspruch 7 oder 8, *dadurch gekennzeichnet*, daß die Zustellung nach dem Ausschalen auf 150°C mit einer max. Geschwindigkeit von 8°C/h aufgeheizt wird.

## Claims

1. A refractory thixotropic self-hardening vibration compound on a zirconium silicate base for producing a vibration density of at least 3.5 g/cm3,

8

characterized by the following chemical composition (in % by weight):

20  to 30    % $SiO_2$
20  to 45    % $Al_2O_3$
 0.7 to  1.4  % $TiO_2$
 0.2 to  0.8  % $P_2O_5$
 0  to  1.5  % $K_2O + Na_2O + LiO_2$
 0  to  1.0  % $Fe_2O_3$
 0  to  0.05 % CaO
residue        $ZrO_2$

and having the following base refractory materials (in % by weight):

25  to 50    % sintered bauxite
 1  to 10    % alumina
 0.1 to  3.0 % amorphous silica
 0.3 to  1    % aluminium metaphosphate
 0.5 to  4    % alkali silicates having a molar ratio
                 of 1 : 2 to 1 : 4
residue zirconium silicate

and the following grain fraction:

20 to 35 % :   up to 0.06 mm
25 to 60 % : 0.06 to 0.5   mm
 5 to 55 % : 0.5  to 5      mm

2. A compound according to claim 1, characterized in that the zirconium silicate has the following grain spectrum:

20 to 40 :   up to 0.06 mm
60 to 80 : 0.06 to 0.5   mm

3. A compound according to claims 1 or 2, characterized in that the sintered bauxite has the following chemical composition (in % by weight):

  5 to 13 % $SiO_2$
80 to 90 % $Al_2O_3$
residue       impurities

and a raw grain density of at least 3.0 g/cm3 and a total porosity of 20 % and less.

4. A compound according to one of claims 1 to 3, characterized in that the alumina used is a reactive α alumina having a mean primary grain size below 3.5 μm and a grain size of at least 45 % below 2 μm, the silica used being colloidal silica having a grain size below 1 μm.

5. A compound according to one of claims 1 to 4, characterized in that the quantity of mixing water is 3.0 to 5.0 kg per 100 kg of dry mass.

6. A compound according to one of claims 1 to 5, characterized in that it contains 0.05 to 0.2 % by weight of a pulverulent wetting agent, preferably alkyl aryl polyoxy ethanol.

7. A process for the vibration lining of metallurgical vessels, more particularly steelworks ladles,

5

using a refractory thixotropic compound according to one of claims 1 to 6, characterized in that the components of the compound are intensively mixed in the dry condition, the quantity of mixing water is added before vibration starts, the wet compound is mixed and filled with constant vibration into the space between an introduced template and the ladle wall, and the lining is heated after removal of the template.

8. A process according to claim 7, characterized in that the quantity of mixing water is added with a minimum precision of 0.1 % and the wet compound is mixed for at least 2 and at most 10 minutes.

9. A process according to claims 7 or 8, characterized in that after template removal the lining is heated at a maximum speed of 8°C per hour to 150°C.

**Revendications**

1. Masse vibratoire réfractaire thixotrope autodurcissante à base de silicate de zirconium pour obtenir une densité vibratoire d'au moins 3,5 g/cm³,

caractérisée par la composition chimique suivante (en % en masse)

```
20   à 30    % SiO2
20   à 45    % Al2O3
 0,7 à  1,4  % TiO2
 0,2 à  0,8  % P2O5
 0   à  1,5  % K2O + Na2O + LiO2
 0   à  1,0  % Fe2O3
 0   à  0,05 % CaO
Reste        ZrO2
```

et avec les matières de base réfractaires suivantes (en % en masse)

```
25   à 50  % de bauxite frittée
 1   à 10  % d'alumine
 0,1 à  3  % d'acide silicique amorphe
 0,3 à  1,0 % de métaphosphate d'aluminium
 0,5 à  4  % de silicate alcalin avec un rapport
              molaire de 1 : 2 à 1 : 4
Reste: silicate de zirconium
```

et la fraction granulométrique suivante:

```
20 à 35 % : jusqu'à 0,06 mm
25 à 60 % : 0,06 à 0,5  mm
 5 à 55 % : 0,5  à 5    mm
```

2. Masse selon la revendication 1, caractérisée en ce que le silicate de zirconium présente le spectre granulométrique suivant:

```
20 à 40 : jusqu'à 0,06 mm
60 à 80 : 0,06 à 0,5 mm
```

3. Masse selon la revendication 1 ou 2, caractérisée en ce que la bauxite frittée a la composition chimique suivante (en % en masse):

```
5 à 13 % SiO2
80 à 90 % Al2O3
Reste    Impuretées
```

4. Masse selon l'une de" revendications 1 à 3, caractérisée en ce qu'on utilise, comme alumine, de l'alumine-α réactive avec grosseur de grains primaire moyenne en-dessous de 3,5 µm et une grosseur de grains d'au moins 45 % en-dessous de 2 µm, et, comme acide silicique, de l'acide silicique colloïdal avec une grosseur de grains inférieure à 1 µm.

5. Masse selon l'une des revendications 1 à 4, caractérisée en ce que la quantité d'eau de délayage, pour 100 kg de masse sèche, est égale à 3,0 à 5,0 kg.

6. Masse selon l'une des revendications 1 à 5, caractérisée en ce qu'elle contient de 0,05 à 0,2 % en masse d'un agent mouillant, de préférence un alkylaryl-polyoxyéthanol.

7. Procédé pour la réparation vibratoire de récipients métallurgiques, en particulier de poches de coulée d'aciérie, avec une masse réfractaire thixotrope selon l'une des revendications 1 à 6, caractérisé en ce que les composants de la masse sont mélangés intensivement à l'état sec, qu'avant le début de la vibration, la quantité d'eau de délayage est ajoutée, la masse humide est mélangée, celle-ci est introduite sous vibration permanente dans l'espace entre un gabarit introduit et la paroi de la poche de coulée, et la réparation est chauffée après le décoffrage.

8. Procédé selon la revendication 7, caractérisé en ce que la quantité d'eau de délayage est ajoutée avec une précision d'au moins 0,1 % et la masse humide est mélangée pendant au moins 2 et au plus 10 minutes.

9. Procédé selon la revendication 7 ou 8, caractérisé en ce que la réparation est chauffée après le décoffrage jusqu'à 150°C avec une vitesse maximale de 8°C/h.